# EUROPÄISCHE PATENTSCHRIFT

(11) **EP 1 985 465 B1**
(45) Veröffentlichungstag und Bekanntmachung des Hinweises auf die Patenterteilung: **14.11.2012**
(21) Anmeldenummer: 08007775.3
(22) Anmeldetag: 22.04.2008
(51) Int. Cl.: B60B 1/04, B60B 5/02, B29C 70/20, B60B 1/00, B29C 70/34, B60B 21/06, B29K 105/24, B29L 31/30

(54) **Speiche, Rad und Verfahren zur Herstellung einer Speiche, insbesondere für Fahrräder**
Spoke, wheel and method for manufacturing a spoke, in particular for bicycles
Rayon, roue et procédé de fabrication d'un rayon, en particulier pour vélos

(30) Priorität: 24.04.2007 DE 102007019612
(43) Veröffentlichungstag der Anmeldung: 29.10.2008
(73) Patentinhaber: DT Swiss AG, 2500 Biel (CH)
(72) Erfinder: Heyse, Joachim, 82515 Wolfratshausen (DE)
(74) Vertreter: Schütte, Hartmut

(56) Entgegenhaltungen:
- EP-A- 1 304 238
- EP-A- 1 764 233
- WO-A-00/35683
- WO-A-91/13771
- WO-A-98/57812
- US-A- 6 036 281

## Beschreibung

Die Erfindung betrifft eine Speiche und ein Rad, sowie ein Verfahren zur Herstellung einer Speiche, insbesondere für Fahrräder. Obwohl die Erfindung im folgenden mit Bezug auf den Einsatz an Fahrrädern beschrieben wird, wird darauf hingewiesen, dass der Einsatz auch an deren Ein- oder Mehrrädern möglich ist, wie z.B. an Fahrradanhängern, Rollern oder Rollstühlen.

Bei hochwertigen Fahrradkomponenten spielt das Gewicht derselben eine erhebliche Rolle. Um das Gewicht von Rädern, Felgen und Speichen von Fahrrädern zu verringern, sind deshalb solche Fahrradkomponenten aus faserverstärktem Kunststoff bekannt geworden, bei denen bei geringerem Gesamtgewicht eine vergleichbare Stabilität wie bei Rädern mit Metallfelgen erzielbar ist.

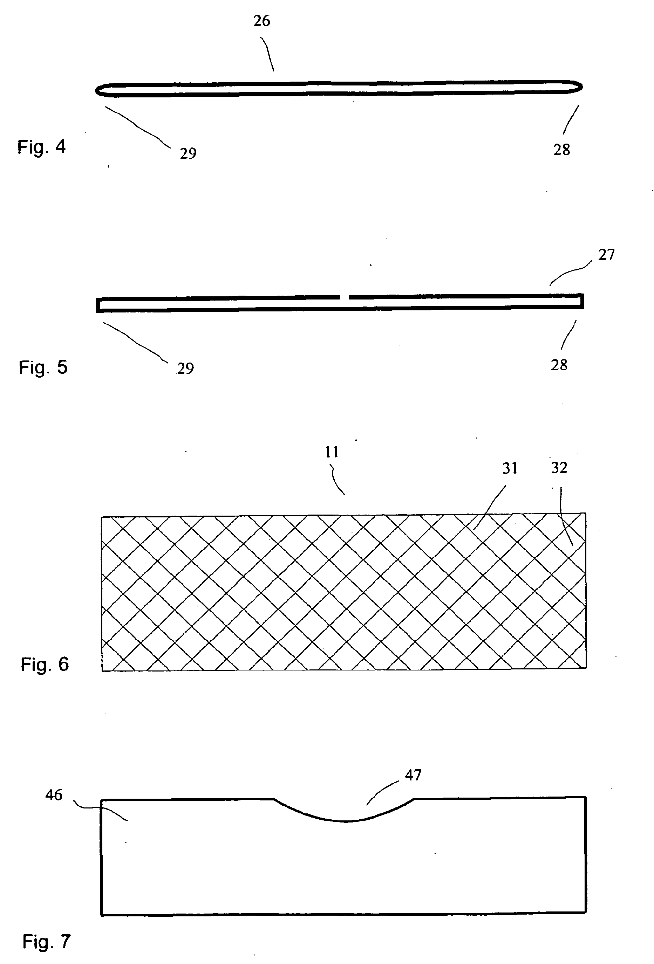

So ist aus der WO 00/35683 A1 ein Rad für ein Fahrrad bekannt geworden, bei dem die Speichen in dem Ausführungsbeispiel nach der Fig. 6 aus faserverstärktem Kunststoff bestehen. Die einzelnen Speichen weisen ein Bündel an Einzelfasern auf, die an den Enden der Speiche überstehen und aufgefächert werden können, um einen festen Sitz an der Felge und der Nabe zu ermöglichen.

Aus der EP 1 764 233 A ist eine gattungsgemäße Speiche bekannt.

Insbesondere aber nicht nur an Hinterrädern von Fahrrädern werden oftmals die Speichen in sich kreuzender Weise eingespannt. Das ermöglicht die Übertragung hoher Antriebsdrehmomente und beispielsweise den Einsatz von Scheibenbremsen. Es können neben Radialkräften auch Umfangskräfte aufgenommen werden. Nachteilig bei sich kreuzenden Speichen ist allerdings, dass die Speichen an der Kreuzungsstelle gebogen werden und im Betrieb bei den wechselnden Belastungen aneinander reiben können. Deshalb liegen die angestrebten Bedingungen nicht immer exakt vor, sondern sind gegebenenfalls zeitlichen Änderungen unterworfen.

Vor dem Hintergrund dieses Standes der Technik ist es deshalb die Aufgabe der vorliegenden Erfindung, ein leichtes Rad, sowie leichte Speichen zur Verfügung zu stellen, das bzw. die eine hohe Festigkeit aufweisen. Weiterhin soll die Übertragung von Radial- und Umfangskräften möglich sein.

Diese Aufgabe wird gelöst durch eine Speiche mit den Merkmalen des Anspruchs 1 und durch ein Rad mit den Merkmalen des Anspruchs 10. Das erfindungsgemäß Verfahren ist Gegenstand des Anspruchs 16. Bevorzugte Weiterbildungen und Ausgestaltungen sind Gegenstand der jeweiligen Unteransprüche.

Eine erfindungsgemäße Speiche ist insbesondere für den Einsatz an Fahrrädern vorgesehen und umfasst wenigstens zwei Speichenkörper. Jeder Speichenkörper weist Speichenenden auf, welche dafür vorgesehen sind, an einer Felge bzw. einem Nabenkörper befestigt zu werden. Erfindungsgemäß besteht der Speichenkörper wenigstens im Wesentlichen aus einem Faserverbundwerkstoff und umfasst eine Vielzahl von Fasern. Erfindungsgemäß sind die zwei Speichenkörper einstückig verbunden und kreuzen sich in einer Ebene.

Die erfindungsgemäße Speiche hat erhebliche Vorteile. Durch die Vielzahl der entlang des Speichenkörpers ausgerichteten Fasern wird eine hohe Festigkeit der erfindungsgemäßen Speiche erzielt.

Die Speiche mit zwei sich in einer Ebene kreuzenden Speichenkörpern erlaubt in vorteilhafter Weise die Kraftübertragung nicht nur in radialer, sondern auch in Umfangsrichtung. Da der Kreuzungspunkt der beiden Speichenkörper in einer Ebene liegt muss keine Speiche gebogen werden. Ein reibender und gebogener Kontaktpunkt wird zuverlässig vermieden. Insgesamt liegt nicht nur der Kreuzungspunkt der beiden sich kreuzenden Speichenkörper der Speiche in einer Ebene, sondern die Speiche mit beiden Speichenkörpern insgesamt.

Somit stellt die Erfindung eine sehr leichte Speiche für eine gekreuzte Einspeichung zur Verfügung, die mit einer leichteren Felge kombinierbar ist. In einer bevorzugten Weiterbildung der Erfindung umfasst der Speichenkörper eine Vielzahl von Fasern, die radial nach außen hin über die Länge des Speichenkörpers von wenigstens einer Deckschicht umgeben sind. Eine derartige Deckschicht ermöglicht eine hohe optische Qualität der Oberfläche der Speiche, da die im Inneren der Speiche angeordneten Fasern durch die Deckschicht abgedeckt werden.

Als Deckschicht wird insbesondere ein Fasergelege eingesetzt, welches parallel ausgerichtete Einzelfasern umfasst, die über eine Klebeschicht oder dergleichen nebeneinander liegend dicht miteinander verbunden sind. Alternativ dazu ist auch der Einsatz einer Gewebelage oder eines Geflechts oder dergleichen möglich. Bei Einsatz eines Fasergeleges wird eine besonders hohe Oberflächenqualität erzielt, da die dicht aneinander liegenden einlagigen Einzelfasern eine optisch besonders ansprechende Oberfläche ermöglichen.

Vorzugsweise sind die an wenigstens einem Ende frei liegenden Fasern unverbunden. Damit soll eine einfache Einbindung der Speichen an der Felge bzw. der Nabe ermöglicht werden.

In allen Ausgestaltungen ist wenigstens eine Faser einer Gruppe von Fasern entnommen, welche Kunststofffasern, Carbonfasern, Kevlarfasern, Aramidfasern, Glasfasern und Borfasern umfasst. Auch andere Fasermaterialien sind möglich. So können beispielsweise auch Metallfasern und sonstige anorganische oder organische Fasermaterialien eingesetzt werden. Besonders bevorzugt werden Kohlenstofffasern, Glasfasern und/oder Kevlarfasern eingesetzt.

In besonders bevorzugten Weiterbildungen werden Fasern aus zwei unterschiedlichen Fasermaterialien eingesetzt, vorzugsweise wird ein erheblicher und insbesondere der Hauptteil der Fasern durch beispielsweise Kohlenstofffasern gebildet, die eine hohe Zugfestigkeit aufweisen, während ein kleinerer, aber dennoch erheblicher Anteil der Fasern durch beispielsweise Kevlarfasern gebildet wird, die eine höhere Bruchdehnung aufweisen, wodurch beim Bruch der Speiche, diese nicht abrupt reißt sondern über die Kevlarfasern noch eine zähere Verbindung besteht. Es können auch Fasern aus drei oder mehr unterschiedlichen Fasermaterialien eingesetzt werden.

Vorteilhafterweise ist der Querschnitt des Speichenkörpers symmetrisch ausgebildet und insbesondere aerodynamisch geformt. Vorzugsweise ist der Querschnitt elliptisch ausgebildet, um einen geringen Windwiderstand zu bieten.

In einer besonders bevorzugten Ausführungsform umfasst die Speiche drei sich kreuzende Speichenkörper, die miteinander verbunden sind. Dabei sind die sich kreuzenden Speichenkörper insbesondere in derselben Ebene angeordnet, sodass trotz der sich kreuzenden Speichenkörper die drei Speichenkörper später im Rad einen geraden, ungebogenen Verlauf aufweisen, wodurch die Stabilität ansteigt.

In allen Ausgestaltungen stehen an wenigstens einem Speichenende frei liegende Fasern ab, die fächerartig ausbreitbar sind. Die an dem Speichenende hervorstehenden und im Wesentlichen nicht miteinander verbundenen Fasern erlauben eine einfache Einbindung an der Felge bzw. an dem Nabenkörper. Durch die Möglichkeit der Auffächerung und der aufgefächerten Einbettung in die Felge bzw. in den Nabenkörper wird eine hohe Festigkeit und eine gute Einbindung dieser Komponenten ermöglicht. Eine besondere Verstärkung der Speichenansatzpunkte ist an den Komponenten nicht erforderlich, da die auftretende Last durch die aufgefächerten Fasern der pinselartigen Speichenenden großflächig eingeleitet wird.

Das ist vorteilhaft, da die Befestigung von Speichen an der Felge bei Felgen aus faserverstärktem Kunststoff oftmals schwierig ist, da für konventionelle Speichennippel eine entsprechend stabile Auflage zur Verfügung gestellt werden muss.

Besonders bevorzugt weist die einstückig aus wenigstens zwei sich in einer Ebene kreuzenden Speichenkörpern gebildete Speiche in jedem Speichenkörper Fasern auf, die sich jeweils in Längsrichtung des jeweiligen Speichenkörpers erstrecken und an wenigstens einem Speichenende als frei liegende Fasern überstehen und dort fächerartig ausbreitbar sind oder ausgebreitet sind.

In allen Ausgestaltungen ist es bevorzugt, dass die Fasern als Monofilamente ausgebildet sind. Vorzugsweise werden zur Herstellung der Speichen Rovings aus unidirektionalen Fasern bzw. Monofilamenten eingesetzt, die eine hohe Stabilität der Speiche ermöglichen.

Das erfindungsgemäße Rad ist insbesondere für den Einsatz an Fahrrädern vorgesehen und umfasst eine Felge, einen Nabenkörper und die Felge und den Nabenkörper verbindende Speichen. Dabei besteht wenigstens eine Speiche einstückig aus wenigstens zwei sich in einer Ebene kreuzenden Speichenkörpern und sich daran anschließenden Speichenenden. Wenigstens die Speichen des erfindungsgemäßen Rades bestehen aus einem Faserverbundmaterial. Vorzugsweise besteht die Felge und/oder der Nabenkörper wenigstens teilweise aus einem Faserverbundmaterial.

Bei dem erfindungsgemäßen Rad umfassen die Speichenkörper jeweils insbesondere eine Vielzahl von Fasern, die an wenigstens einem Speichenende über den Speichenkörper hinaus überstehen und die im aufgefächerten Zustand in der Felge und/oder dem Nabenkörper eingebettet sind.

Das erfindungsgemäße Rad hat ebenfalls erhebliche Vorteile. Durch die an den Enden der Speichenkörper pinselartig hervorstehenden Fasern, die in aufgefächertem Zustand in die Felge oder in den Nabenkörper eingebettet werden, wird eine hohe Belastbarkeit und Festigkeit der Verbindung zwischen Speiche und Nabenkörper bzw. Felge erzielt. Dabei ist eine aufwändige Verstärkung der Speichenansatzpunkte an der Felge bzw. dem Nabenkörper nicht erforderlich, da durch die aufgefächerte Einbindung bedingt eine hohe Belastbarkeit der Verbindung zwischen Speiche und Felge oder zwischen Speiche und Nabenkörper ermöglicht wird.

Als Fasern werden insbesondere Monofilamente eingesetzt, die unidirektional nebeneinander angeordnet sind. In bestimmten Ausführungsformen des erfindungsgemäßen Rades oder der erfindungsgemäßen Speiche ist auch der Einsatz eines bestimmten Anteils von verdrillten Fasern oder dgl. bevorzugt.

Die Einbettung der Speichenenden in die Felge und/oder den Nabenkörper erfolgt dabei nicht nur kraftschlüssig, sondern auch formschlüssig.

Vorteilhafterweise besteht auch die Felge und vorzugsweise auch der Nabenkörper aus einem Faserverbundwerkstoff, wodurch ein besonders leichtes Rad ermöglicht wird.

Zur Erhöhung der Oberflächenqualität werden die Fasern der Speichen entlang des Speichenkörpers von einer Deckschicht umgeben, die als Fasergelege oder als Gewebeschicht oder als Geflecht oder dergleichen ausgeführt sein kann.

Das erfindungsgemäße Rad kann neben den gekreuzten Speichen auch radial ausgerichtete Speichen aufweisen. Bei den gekreuzten Speichen kreuzen sich dabei die zwei Speichenkörper unter einem Kreuzungswinkel. Da die sich kreuzenden Speichenkörper in einer Ebene liegen, ist eine Biegung der sich kreuzenden Speichen nicht nötig.

Vorteilhafterweise ist das erfindungsgemäße Rad einteilig und vorzugsweise einstückig ausgebildet, sodass die Felge, die Speiche und der Nabenkörper insgesamt ein einheitliches miteinander verbundenes Teil bilden.

Bei dem erfindungsgemäßen Verfahren zur Herstellung einer Speiche werden in zwei sich kreuzenden Mulden einer ersten Halbform und in zwei korrespondierende sich kreuzende Mulden einer zweiten Halbform jeweils Deckschichten eingelegt, auf die jeweils eine derartige Anzahl von unidirektional ausgerichteten Fasern gekreuzt gelegt wird, sodass die Mulden jeweils ausgefüllt sind. Dabei werden die Fasern entweder in der Halbform mit Harz getränkt oder die Fasern werden als Prepreg ausgeführt. Anschließend werden die beiden Halbformen miteinander verbunden, sodass die jeweiligen Mulden aneinander grenzen. Nach dem Aushärten steht eine Speiche mit zwei sich kreuzenden Speichenkörpern zur Verfügung, wobei sowohl der Kreuzungspunkt und auch die sich kreuzenden Speichenkörper in einer Ebene liegen.

Insbesondere stehen an den axialen Enden der Speichenkörper Einzelfasern über, die frei liegen und fächerartig ausbreitbar sind.

Vorzugsweise stehen die freien unverbundenen Faserenden über die Halbformen hinaus.

In allen Ausgestaltungen ist es bevorzugt, dass die Halbformen zunächst mit einem Trennmittel beschichtet werden, um ein Anhaften des Faserverbundwerkstoffes an den Halbformen zu vermeiden.

Vorteilhafterweise wird als Deckschicht ein Fasergelege oder ein Fasergewebe eingesetzt und insbesondere werden als Fasern Monofilamente eingesetzt; z.B. in Form eines Rovings.

Weitere Vorteile und Anwendungsmöglichkeiten der vorliegenden Erfindung ergeben sich aus dem Ausführungsbeispiel, das nun mit Bezug auf die beiliegenden Figuren beschrieben wird.

In den Figuren zeigen:
- Fig. 1: eine teilweise geschnittene Seitenansicht eines Rades mit gekreuzten Speichen;

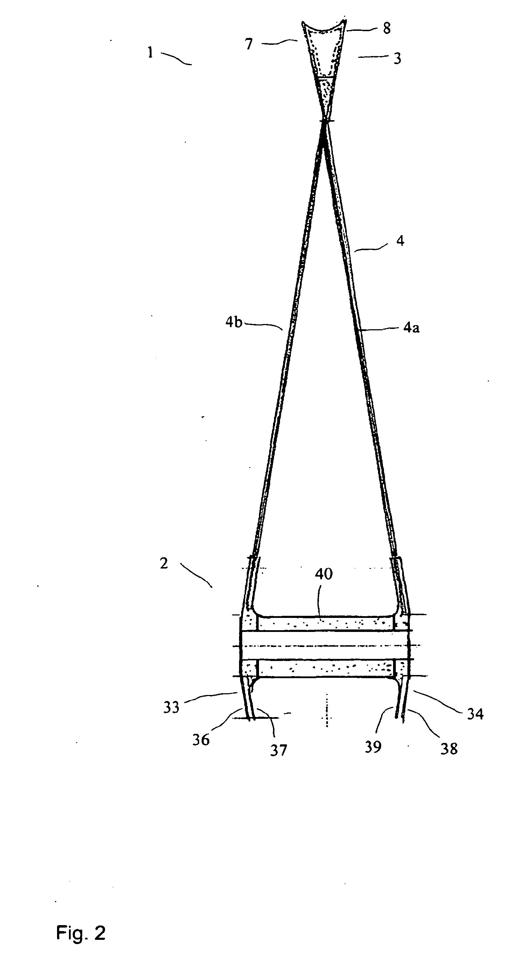

- Fig. 2: eine quergeschnittene Ansicht eines erfindungsgemäßen Rades;
- Fig. 3: einen Querschnitt durch die Herstellungsform und die Felge nach Fig. 2;
- Fig. 4: eine prinzipielle Ansicht eines Gewebeschlauchs;
- Fig. 5: eine prinzipielle Ansicht eines umgelegten Gewebestreifens;
- Fig. 6: eine Aufsicht auf einen Gewebeabschnitt; und
- Fig. 7: eine prinzipielle Querschnittsansicht einer Halbform zur Herstellung der Speichen.

Im folgenden wird nun mit Bezug auf die beiliegenden Figuren ein Ausführungsbeispiel der vorliegenden Erfindung erläutert.

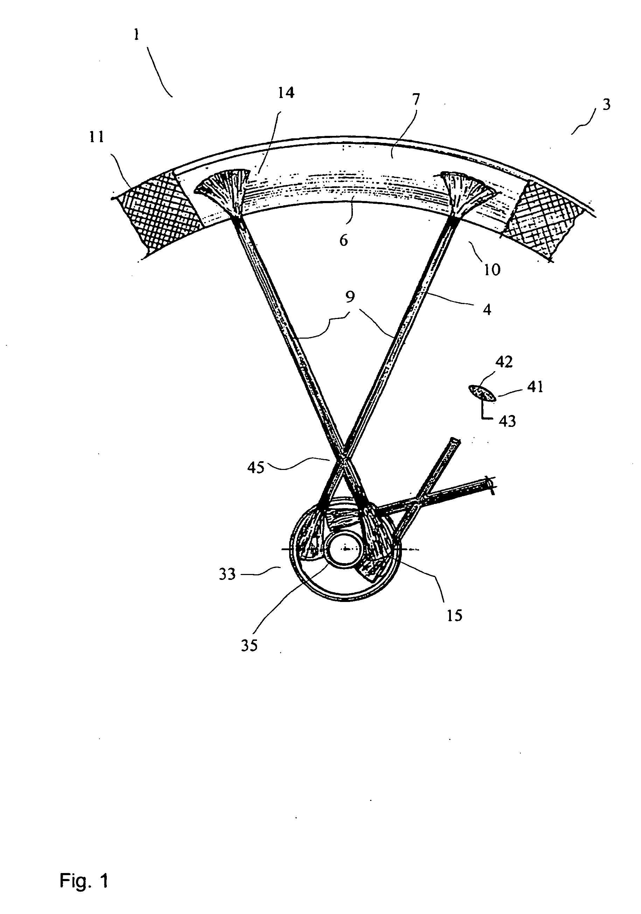

Zur Herstellung des Rades 1 werden zunächst Speichen 4 hergestellt, die gemäß der Darstellung nach Fig. 1 zwei gekreuzte Speichenkörper 9 aufweisen.

Bei dem in Fig. 1 dargestellten Ausführungsbeispiel eines Rades 1 sind gekreuzte Speichen 4 vorhanden, wobei jede Speiche 4 zwei gekreuzte Speichenkörper 9 aufweist, die in einer Ebene liegen und einstückig miteinander verbunden sind. Das Herstellen erfolgt mit einer entsprechenden Form, in die gekreuzte Faserbündel und Fasergelege eingelegt werden, um die gekreuzten Speichen einstückig herzustellen. An den vier Enden der Speichenkörper 9 stehen dabei die Einzelfasern 42 von den Speichenkörpern 9 ab, um in der Felge bzw. in dem Nabenkörper formschlüssig eingebunden zu werden.

Zur Herstellung der in Fig. 1 abgebildeten Speichen 4 wird eine Deckschicht 41, die hier im Ausführungsbeispiel als einlagiges Gelege ausgeführt ist, in eine erste Mulde einer ersten Halbform 46 eingelegt, nachdem die Halbform 46 mit einem Trennmittel versehen wurde, um ein Anhaften der fertigen Speichen 4 zu vermeiden. In eine zweite Mulde der ersten Halbform 46 wird ebenfalls eine Deckschicht 41 eingelegt. Die zweite Mulde kreuzt die erste Mulde dabei unter einem Kreuzungswinkel. Insgesamt liegen beide Mulden in einer Ebene, sodass auch die späteren einstückig miteinander verbundenen Speichenkörper 9 der Speiche 4 inklusive des Kreuzungspunktes in einer Ebene angeordnet sind.

Auf die Deckschichten 41 in den beiden Mulden der ersten Halbform 46 wird anschließend jeweils eine Vielzahl paralleler unidirektionaler Fasern 42 aufgelegt, die die Speichenspannung aufnehmen. Die in den beiden Mulden aufgelegten parallelen unidirektionalen Fasern 42 kreuzen sich dabei am Kreuzungspunkt. Die Fasern in den beiden Mulden können einzeln oder in Gruppen abwechselnd in die beiden Mulden eingelegt oder bündelweise in die in die beiden Mulden eingebracht werden.

Dabei wird dafür gesorgt, dass die Mulden 47 der Halbform 46 vollständig ausgefüllt wird bzw., dass etwas mehr Fasern eingelegt werden als Querschnittsfläche zur Verfügung steht.

In eine zweite Halbform werden korrespondierende Deckschichten 41 und Fasern 42 eingelegt.

Die Länge der Mulden in der Halbform 46 entspricht der Speichenlänge zwischen dem Nabenkörper 2 und der Felge 3. Die Länge der in die Halbform 46 eingelegten Fasern ist aber größer als die Länge der Halbform 46, sodass an beiden Enden die Einzelfasern 41 über das jeweilige Ende der Halbform 46 überstehen, und zwar vorzugsweise zwischen etwa ein und drei Zentimetern, vorzugsweise etwa 2 Zentimeter.

Die überstehenden Fasern 42 können deshalb aufgefächert werden, wenn die Speiche hergestellt wird, oder wenn die Speiche in die Felge 3 bzw. den Nabenkörper 2 integriert wird. Dadurch wird es mit der Speiche 4 ermöglicht, einen sicheren und festen Halt in der Felge oder in dem Nabenkörper zu gewährleisten, ohne dass aufwändige Verstärkungslagen oder dergleichen in die Bauteile integriert werden müssen, um den nötigen Halt zu gewährleisten.

Die Speichen 4 werden separat vorgefertigt und separat ausgehärtet und können für die Produktion der Räder bevorratet werden.

Grundsätzlich ist zur Herstellung der Speichen und zur Herstellung der Felgen 3 bzw. des gesamten Rades 1 der Einsatz von vorimprägniertem Fasergewebe möglich, es ist aber auch der Einsatz von trockenen Fasern oder Fasergewebe möglich und bevorzugt, die anschließend bei der Fertigung mit einem Harz getränkt werden.

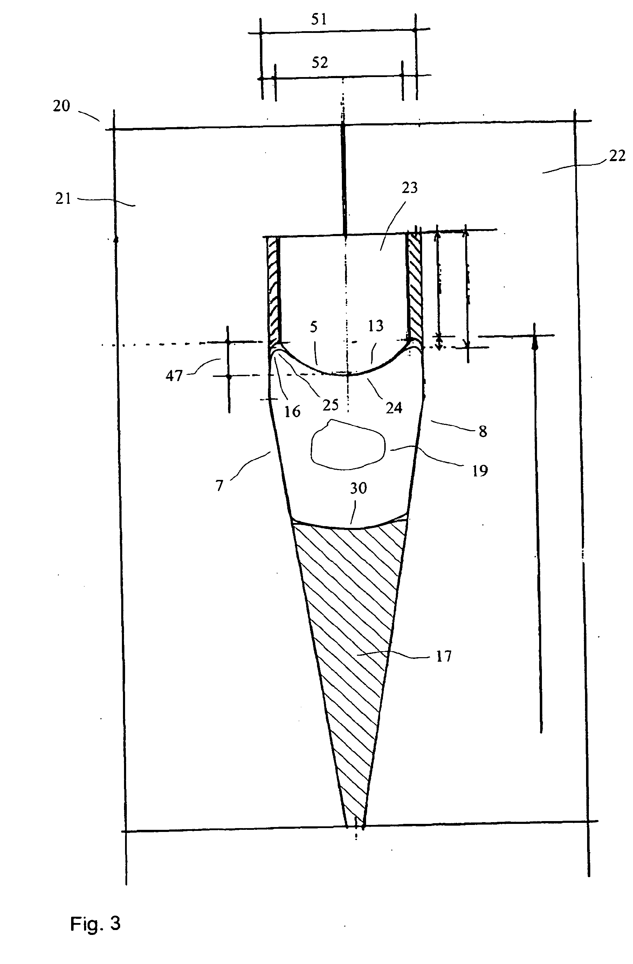

Zur Herstellung des in Fig. 1 abschnittsweise dargestellten Rades 1 wird eine Form 20 verwendet, die Formteile 21 und 22 aufweist (siehe die Fig. 3).

Das eben auf einer Unterlage aufgelegte Formteil 21 wird ebenso wie das Formteil 22 mit einem Trennmittel beschichtet. Anschließend wird auf das Formteil 21 ein Gewebeabschnitt 11 kreisförmig entlang des Umfangs der herzustellenden Felge 3 aufgelegt, sodass der Gewebeabschnitt 11 bei der späteren Felge 3 die Felgenflanke 7 bildet. In analoger Weise wird in das Formteil 22 der Herstellform 20 ein Gewebeabschnitt 12 eingelegt, der die Felgenflanke 8 bildet.

Als Gewebeabschnitte 11 und 12 können die in den Fig. 4 und 5 im Querschnitt dargestellten Gewebeabschnitte verwendet werden. Vorzugsweise wird der in Fig. 4 dargestellte Gewebeabschnitt verwendet, der als Gewebeschlauch 26 ausgeführt wird. Der Gewebeschlauch 26 weist Fasern 31 und 32 auf, wie es in Fig. 6 dargestellt ist, die jeweils etwa unter einem Winkel von 45° zur Längsrichtung des Gewebeabschnitts ausgerichtet sind.

Durch die Verwendung eines Gewebeschlauches 26 mit unter Winkeln angeordneten Fasern 31 und 32 wird eine hohe Drappierbarkeit des Gewebeabschnitts 11 erzielt, wodurch der Gewebeabschnitt 11 in hervorragender Weise in der Form 21 einlegbar ist, wobei gleichzeitig die Gewebequalität über den Umfang und über die radiale Richtung der Felgenflanke 7 in gleichbleibender homogener Qualität erhalten bleibt.

Dadurch wird ein hohes Maß an Qualität bei der Herstellung der Felge und des Rades erreicht. Im Stand der Technik hingegen werfen aufgelegte Streifen oftmals Falten an den radial inneren oder an den radial äußeren Stellen der Felge. Gleichzeitig variiert der Maschenabstand und die Maschenweite, wodurch keine homogenen Eigenschaften der Felge und Rades erzielt werden.

Nach dem Auflegen des Gewebeabschnitts 11 werden die Enden 14 der der Felgenflanke 8 zugeordneten Speichen 4 auf den Gewebeabschnitt 11 aufgelegt, wobei die überstehenden Fasern 42 aufgefächert werden, um einen möglichst großen Halt in der Felge zu gewährleisten. Möglich ist es auch, dass die Fasern 42 bei der Herstellung der Speiche 4 schon aufgefächert wurden und im aufgefächerten Zustand platt ausgehärtet werden, sodass die aufgefächerte und bereits ausgehärtete Speiche auf den auf dem Formteil 21 aufliegenden Gewebeabschnitt 11 aufgelegt wird.

Auch hier wird eine Speiche 4 mit sich in einer Ebene kreuzenden Speichenkörpern 9 hergestellt.

Im radial inneren Bereich wurde zentrisch zum Formteil 21 ein Nabenkörperhalter 35 ausgerichtet, auf den der erste Nabenaußendeckel 36, der erste Nabeninnendeckel 37 und anschließend der zweite Nabeninnendeckel 39 und der zweite Nabenaußendeckel 38 aufgeschoben werden. Im radial inneren Bereich werden zwischen dem zweiten Nabenaußendeckel 38 und dem zweiten Nabeninnendeckel 39 die an den inneren Speichenenden 15 überstehenden Fasern 42 aufgefächert und zwischen den Deckeln 38 und 39 positioniert. Nach Zugabe eines Verbindungsmittels in Form beispielsweise eines Harzes werden die Deckel 38 und 39 aufeinander gepresst und zu einem zweiten Nabendeckel 34 verbunden. Analog wird später mit dem ersten Nabenaußen- und Nabeninnendeckel 36 und 37 verfahren.

Auf die auf dem Gewebeabschnitt 11 angeordneten Speichenenden 14 wird ein Kern 17 aufgelegt, der einen etwa dreieckigen Querschnitt aufweist und dafür vorgesehen ist, im Bereich des Felgenbodens angeordnet zu werden.

Ein Formring 23, dessen radiale innere Oberfläche 24 an die gewünschte Felgenbettform angepasst ist, wird wenigstens auf der inneren Oberfläche 24 mit einem Gewebestreifen belegt. Alternativ oder ergänzend dazu kann ebenfalls ein Gewebeschlauch auf die innere Oberfläche 24 des Formrings 23 aufgelegt werden. Anschließend wird der Formring 23 in das Formteil 21 eingelegt, sodass zwischen dem Kern 17 und dem Formring 23 ein radialer Abstand bzw. Spalt verbleibt.

In dem verbleibenden Spalt wird ein mit einem Gewebeabschnitt 16 umgebener aufblasbarer Schlauch 19 eingeführt. Der den aufblasbaren Schlauch umgebende Gewebeabschnitt 16 kann beispielsweise als Gewebeschlauch 25 ausgeführt sein, der auf den aufblasbaren Schlauch 19 aufgezogen wird. Alternativ dazu kann der aufblasbare Schlauch auch mit einem Gewebestreifen oder dergleichen umwickelt oder umgeben werden, bevor der aufblasbare Schlauch 19 in den Spalt eingelegt wird.

Der Gewebeabschnitt 16 verstärkt im radial äußeren Bereich das Felgenbett und auf den Seiten die Felgenflanken 7 und 8, die auch die Bremsflächen 47 aufweisen. Im radial inneren Bereich verstärkt der Gewebeabschnitt 16 mit einem Quersteg 30 die Felge 3, sodass die Felge 3 besser geeignet ist, die beim Bremsen auftretenden Belastungen aufzunehmen.

Nach dem Einlegen des aufblasbaren Schlauches 19 wird auf das Formteil 21 das Formteil 22 aufgelegt und die Form 20 insgesamt verschlossen. Nach dem Erhöhen des Druckes im aufblasbaren Schlauch 19 wird die Herstellform 20 auf ein erhöhtes Temperaturniveau gebracht, um den Vernetzungsprozess zu beschleunigen.

Gleichzeitig oder zuvor wird der aufblasbare Schlauch 19 unter Druck gesetzt, um eine Verpressung der einzelnen Gewebeabschnitte zu bewirken.

Nach dem Aushärten und Abkühlen der Herstellform 20 wird die Herstellform 20 geöffnet und das Rad entnommen.

Ein bedeutender Vorteil des Rades 1 ist, dass es einheitlich aus dem selben oder doch wenigstens einem ähnlichen Material besteht, so dass die Felge, die Speichen und der Nabenkörper den gleichen Wärmeausdehnungskoeffizienten haben. Bei konventionellen Rädern, bestehend aus Felgen aus Faserverbundwerkstoffen,und Speichen aus Metall kann es zu einer Lockerung der Speichenspannung kommen, wenn sich das Rad aufheizt, da sich Metallspeichen und Faserverbundwerkstoffe unterschiedlich verhalten. Faserverbundwerkstoffe können negative Wärmeausdehnungskoeffizienten aufweisen, was eine Minderung der Speichenspannung noch verstärken kann. Das Rad 1 weist solche Nachteile nicht auf.

Gegenüber den bekannten Dreispeichenrädern aus Faserverbundwerkstoff wird der erhebliche Vorteil einer viel größeren Seitensteifigkeit bei geringerem Gewicht erzielt.

Durch Einführen einer Nabenhülse 40 zwischen die Nabendeckel 33 und 34 werden die Speichen gespannt. Die Nabenhülse 40 wird mit den Nabendeckeln 33 und 34 verklebt, sodass insgesamt ein einstückiges Rad 1 vorliegt, welches aus Faserverbundwerkstoff besteht.

Ein erheblicher Vorteil des Rades ist, dass die Speichenkörper 9 der Speichen 4 einen gradlinigen Verlauf von dem Ursprung in der Felge bis in den Nabendeckel bzw. Nabenflansch hinein aufweisen. Das wird dadurch erzielt, dass die Felge einen im Wesentlichen dreieckigen Querschnitt aufweist, wobei der Neigungswinkel derart angepasst ist, dass ein gradliniger Verlauf erzielt wird.

In Fig. 1 ist auch ein Querschnitt des Speichenkörpers 9 abgebildet, der hier im Ausführungsbeispiel etwa elliptisch ist, um einen geringen Luftwiderstand zu erzielen.

## Patentansprüche

1. Speiche (4), insbesondere für Fahrräder, mit wenigstens zwei Speichenkörpern (9) und an jedem Speichenkörper (9) vorgesehenen Speichenenden (10), welche dafür vorgesehen sind, an einer Felge (3) bzw. einem Nabenkörper (2) befestigt zu werden, wobei jeder Speichenkörper (9) aus einem Faserverbundwerkstoff besteht und sich die Fasern jeweils in Längsrichtung der Speichenkörper erstrecken und an wenigstens einem Speichenende als frei liegende Fasern fächerartig ausbreitbar sind,
**dadurch gekennzeichnet,**
**dass** eine Biegung der sich kreuzenden Speichen nicht nötig ist, da die zwei Speichenkörper (9) einstückig verbunden sind und sich in einer Ebene kreuzen und jeder Speichenkörper (9) jeweils eine Vielzahl von Fasern (42) umfasst.

2. Speiche nach Anspruch 1, wobei jeder Speichenkörper (9) eine Vielzahl von Fasern (42) umfasst, die nach außen hin über die Länge der Speichenkörper (9) von einer Deckschicht (41) umgeben sind, wobei die Deckschicht (41) aus einem Fasergelege besteht.

3. Speiche nach einem der vorhergehenden Ansprüche, wobei die frei liegenden Fasern unverbunden sind.

4. Speiche nach einem der vorhergehenden Ansprüche, wobei wenigstens eine Faser einer Gruppe von Fasern entnommen ist, welche Kohlenstofffasern, Carbonfasern, Kevlarfasern, Aramidfasern, Glasfasern und Borfasern umfasst.

5. Speiche nach dem vorhergehenden Anspruch, wobei Fasern aus wenigstens zwei unterschiedlichen Fasermaterialien vorgesehen sind.

6. Speiche nach einem der vorhergehenden Ansprüche, wobei der Querschnitt (43) des Speichenkörpers (9) symmetrisch und insbesondere elliptisch ist.

7. Speiche nach einem der vorhergehenden Ansprüche, wobei die Fasern (41) als Monofilamente ausgebildet sind.

8. Rad (1), insbesondere für Fahrräder, mit einer Felge (3) und einem Nabenkörper (2) und die Felge (3) und den Nabenkörper (2) verbindende Speichen (4), wobei die Speichen aus wenigstens einem Speichenkörper (9) und sich daran anschließenden Speichenenden (10) bestehen und wobei wenigstens die Speichen (4) aus einem Faserverbundmaterial bestehen, und sich die Fasern jeweils in Längsrichtung des Speichenkörpers erstrecken und an wenigstens einem Speichenende als frei liegende Fasern fächerartig ausbreitbar sind
**dadurch gekennzeichnet,**
**dass** eine Biegung von sich kreuzenden Speichen nicht nötig ist, da wenigstens eine Speiche (4) einstückig aus wenigstens zwei sich in einer Ebene kreuzenden Speichenkörper (9) gebildet ist, welche eine Vielzahl von Fasern (41) umfassen.

9. Rad nach dem vorhergehenden Anspruch, wobei die Felge (3) und/oder der Nabenkörper (2) aus einem Faserverbundwerkstoff (10) bestehen und wobei die an den Speichenenden aufgefächerten Fasern in der Felge (3) und in dem Nabenkörper (2) eingebettet sind.

10. Rad nach Anspruch 8 oder 9, wobei die Speichen (4) über die Länge der Speichenkörper(9) nach außen hin auf den Längsseiten von einer Deckschicht (42) und insbesondere einem Fasergelege umgeben sind.

11. Rad nach einem der vorhergehenden Ansprüche 8 bis 10, wobei die einstückig aus wenigstens zwei sich in einer Ebene kreuzenden Speichenkörper (9) gebildete Speiche (4) in jedem Speichenkörper (9) Fasern aufweist, die sich jeweils in Längsrichtung der Speichenkörper erstrecken und an wenigstens einem Speichenende als frei liegende Fasern fächerartig ausbreitbar sind.

12. Rad nach einem der vorhergehenden Ansprüche 8 bis 11, wobei das Rad einteilig ausgebildet ist.

13. Verfahren zur Herstellung einer Speiche, bei dem in zwei sich kreuzende Mulden einer ersten Halbform und in zwei korrespondierende sich kreuzende Mulden einer zweiten Halbform jeweils eine Deckschicht eingelegt wird, auf welche jeweils eine derartige Anzahl von Fasern gelegt wird, dass die Mulden im Wesentlichen ausgefüllt sind, wobei die Fasern mit Harz getränkt werden und die beiden Halbformen miteinander verbunden werden und die Speiche mit zwei sich in einer Ebene kreuzenden Speichenkörpern ausgehärtet wird, sodass eine Biegung der sich kreuzenden Speichen nicht nötig ist, wobei die Fasern an wenigstens einem Speichenende als frei liegende Fasern fächerartig ausbreitbar sind.

14. Verfahren nach dem vorhergehenden Anspruch, wobei die Halbformen zunächst mit einem Trennmittel beschichtet werden.

## Claims

1. A spoke (4) in particular for bicycles having at least two spoke bodies (9) and spoke ends (10) provided at each spoke body (9) which are provided to be attached to a rim (3) or a hub body (2) wherein each spoke body (9) consists of a fibrous composite material and the fibers extend in the longitudinal directions of the spoke bodies and, being exposed fibers, can be spread out fan-like at least at one spoke end, **characterized in that** the crossed spokes do not require any bending since the two spoke bodies (9) are integrally connected and crossed in one plane and each spoke body (9) comprises a plurality of fibers (42).

2. The spoke according to claim 1 wherein each spoke body (9) comprises a plurality of fibers (42) which are outwardly enveloped in a cover layer (41) over the lengths of the spoke bodies (9) which cover layer (41) consists of a fiber arrangement.

3. The spoke according to any of the preceding claims wherein the exposed fibers are unconnected.

4. The spoke according to any of the preceding claims wherein at least one fiber is taken from a group of fibers comprising carbon fibers, carbonic fibers, Kevlar fibers, aramidic fibers, glass fibers, and boron fibers.

5. The spoke according to the preceding claim wherein fibers of at least two different fiber materials are provided.

6. The spoke according to any of the preceding claims wherein the cross-section (43) of the spoke body (9) is symmetrical and in particular elliptical.

7. The spoke according to any of the preceding claims wherein the fibers (41) are configured as monofilaments.

8. A wheel (1) in particular for bicycles, having a rim (3) and a hub body (2) and spokes (4) connecting the rim (3) and the hub body (2) wherein the spokes consist of at least one spoke body (9) and succeeding spoke ends (10) and wherein at least the spokes (4) consist of a fibrous composite material and the fibers extend in the longitudinal directions of the spoke bodies and, being exposed fibers, can be spread out fan-like at least at one spoke end, **characterized in that** the crossed spokes do not require any bending since at least one spoke (4) is integrally formed of at least two spoke bodies (9) crossing in one plane and comprising a plurality of fibers (41).

9. The wheel according to the preceding claim wherein the rim (3) and/or the hub body (2) consist of a fibrous composite material (10) and wherein the fibers fanned out at the spoke ends are embedded in the rim (3) and in the hub body (2).

10. The wheel according to claim 8 or 9 wherein the spokes (4) are outwardly enveloped in a cover layer (42) and in particular in a fiber arrangement on the longitudinal sides over the lengths of the spoke bodies (9).

11. The wheel according to any of the preceding claims 8 to 10 wherein the spoke (4) integrally formed of at least two spoke bodies (9) crossing in one plane comprises fibers in each spoke body (9) which extend in the longitudinal directions of the spoke bodies and, being exposed fibers, can be spread out fan-like at least at one spoke end.

12. The wheel according to any of the preceding claims 8 to 11 wherein the wheel is configured unitary.

13. A method of manufacturing a spoke wherein a covering layer each is placed in two corresponding hollows crossing each other of a first mold half and in two hollows crossing each other of a second mold half, onto which such a quantity of fibers is placed that the hollows are substantially filled up wherein the fibers are impregnated with resin and the two mold halves are connected with one another and the spoke is cured with two spoke bodies crossing each other in one plane such that the crossed spokes do not require any bending wherein the fibers, being exposed fibers, can be spread out fan-like at least at one spoke end.

14. The method according to the preceding claim wherein the mold halves are firstly coated in a release agent.

## Revendications

1. Rayon (4), en particulier pour bicyclettes, avec au moins deux corps de rayon (9) et des extrémités de rayon prévues sur chaque corps de rayon (9), celles-ci étant destinées à être fixées sur une jante (3) ou un corps de moyeu (2), chaque corps de rayon (9) étant constitué d'un matériau composite renforcé par des fibres et les fibres s'étirant chacune dans le sens de la longueur du corps de rayon et pouvant être écartées en éventail au moins à une extrémité de rayon en tant que fibres dégagées,
**caractérisé en ce**
**qu'**une courbure des rayons se croisant n'est pas nécessaire car les deux corps de rayon (9) sont reliés d'un seul tenant et se croisent à un niveau et car chaque corps de rayon (9) comprend respectivement plusieurs fibres (42).

2. Rayon selon la revendication 1, chaque corps de rayon (9) comprenant plusieurs fibres (42), lesquelles sont recouvertes, vers l'extérieur, sur la longueur des corps de rayon (9), d'une couche de finition (41), cette couche de finition (41) se composant d'une nappe de fibres.

3. Rayon selon l'une quelconque des revendications précédentes, les fibres dégagées n'étant pas reliées.

4. Rayon selon l'une quelconque des revendications précédentes, au moins une fibre provenant d'un groupe de fibres comprenant des fibres de carbone, des fibres de carbone, des fibres Kevlar, des fibres aramides, des fibres de verre et des fibres de bore.

5. Rayon selon la revendication précédente, des fibres constituées d'au moins deux matériaux fibreux différents étant prévues.

6. Rayon selon l'une quelconque des revendications précédentes, la section (43) du corps de rayon (9) étant symétrique et en particulier elliptique.

7. Rayon selon l'une quelconque des revendications précédentes, les fibres (41) étant en forme de mono filaments.

8. Roue (1), en particulier pour bicyclettes, avec une jante (3), un corps de moyeu (2) et les rayons (4) reliant la jante (3) au corps de moyeu (2), les rayons se composant d'au moins un corps de rayon (9) et d'extrémités (10) en ses bouts, et au moins les rayons (4) étant à base d'un matériau composite renforcé par des fibres, et les fibres s'étirant chacune dans le sens de la longueur du corps de rayon et pouvant être écartées en éventail au moins à une extrémité de rayon en tant que fibres dégagées,
**caractérisée en ce**
**qu'**une courbure des rayons se croisant n'est pas nécessaire, car au moins un rayon (4) est formé d'un seul tenant à partir d'au moins deux corps de rayon (9) se croisant à un niveau, lesquels comprennent une pluralité de fibres (41).

9. Roue selon la revendication précédente, la jante (3) et/ou le corps de moyeu (2) étant constitués à base d'un matériau composite renforcé par des fibres (10) et les fibres écartées en éventail aux extrémités des rayons étant incorporées dans la jante (3) et dans le corps de moyeu (2).

10. Roue selon les revendications 8 ou 9, les rayons (4) étant recouverts, sur toute la longueur des corps de rayons (9), vers l'extérieur, sur leur face longitudinale, d'une couche de finition (42) et en particulier d'une nappe de fibres.

11. Roue selon l'une quelconque des revendications précédentes 8 à 10, où le rayon (4), formé d'un seul tenant à partir d'au moins deux corps de rayon (9) se croisant à un niveau, présente dans chaque corps de rayon (9) des fibres qui s'étirent chacune dans le sens de la longueur des corps de rayon et qui peuvent être écartées en éventail à au moins une extrémité de rayon en tant que fibres dégagées.

12. Roue selon l'une quelconque des revendications précédentes 8 à 11, la roue étant conçue comme roue mono-pièce.

13. Procédé de fabrication d'un rayon, dans lequel est répartie respectivement dans deux cavités qui se croisent d'une demi-forme et dans deux cavités correspondantes, qui se croisent, d'une deuxième demi-forme, une couche de finition sur laquelle est déposé respectivement un nombre de fibres tel que les cavités sont sensiblement remplies, les fibres étant imprégnées de résine et les deux demi-formes étant reliées l'une à l'autre, le rayon étant durci avec deux corps de rayon se croisant à un niveau, de telle sorte qu'une courbure des rayons se croisant n'est pas nécessaire, les fibres pouvant être écartées en éventail à au moins une extrémité de rayon en tant que fibres dégagées.

14. Procédé selon la revendication précédente, les demi-formes étant d'abord revêtues d'un agent séparateur.
